# EUROPÄISCHE PATENTSCHRIFT

(11) **EP 0 650 886 B1**
(45) Veröffentlichungstag und Bekanntmachung des Hinweises auf die Patenterteilung: **22.09.1999**
(21) Anmeldenummer: 94116874.2
(22) Anmeldetag: 26.10.1994
(51) Int. Cl.: B62M 11/06, B62M 11/14, B62L 1/00, H02K 7/18, B62M 9/06

(54) **Fahrrad mit Gangschaltung**
Bicycle gear change
Changement de vitesse pour bicyclette

(30) Priorität: 03.11.1993 DE 9316748 U
(43) Veröffentlichungstag der Anmeldung: 03.05.1995
(73) Patentinhaber: Fulde, Wolfgang K., 82166 Gräfelfing (DE)
(72) Erfinder: Metzinger, Arnold, 82239 Alling (DE)
(74) Vertreter: Brose, D. Karl, Dipl.-Ing.

(56) Entgegenhaltungen:
- CH-A- 191 128
- DE-A- 3 445 042
- FR-A- 743 034

## Beschreibung

Die vorliegende Erfindung betrifft ein Fahrrad mit Gangschaltung.

Die bisher bekannten Fahrräder mit Gangschaltung weisen entweder eine Nabenschaltung oder eine Kettenschaltung auf.

Die Nabenschaltung hat den Nachteil, daß die Zahl der verfügbaren Übersetzungsverhältnisse (Gänge) sehr beschränkt ist. Inzwischen ist es zwar möglich geworden, Nabenschaltungen mit bis zu sieben Schaltstufen zu bauen. Dabei sind jedoch dann sehr komplizierte Konstruktionen erforderlich und die entsprechenden Bauteile müssen sehr klein werden. Die Nabenschaltung muß nämlich stets nach dem Prinzip des Planetengetriebes arbeiten, damit der gleiche Drehsinn zwischen Kettenritzel und Radnabe erhalten bleibt.

Als einzige Möglichkeit, eine wesentlich größere Anzahl von Schaltstufen zur Verfügung zu stellen, sind bisher die Kettenschaltungen bekannt. Diese haben jedoch den Nachteil, daß die Kette trotz aller konstruktiver Bemühungen auch heute noch leicht abspringt. Darüber hinaus sind teilweise bestimmte Übersetzungsverhältnisse gar nicht darstellbar, da die Kette dann zu schräg laufen würde und dies zwangsläufig zum Abspringen der Kette führen würde. Außerdem bedarf die Kette regelmäßiger Pflege (Schmierung) und stellt gleichzeitig eine Verschmutzungsgefahr und Beschädigungsgefahr für die Kleidung des Radfahrers dar.

Aus der FR-A-743 034 ist bereits ein Fahrrad mit Gangschaltung bekannt, bei dem die Kraftübertragung von der Drehkurbelwelle auf das Hinterrad über ein Umlenkgetriebe und ein mehrstufiges schaltbares Hauptgetriebe erfolgt und eine gemeinsame Welle als Abtriebswelle des Umlenkgetriebes und als Antriebswelle des Hauptgetriebes dient.

Ausgehend von diesem Stand der Technik ist es Aufgabe der vorliegenden Erfindung, ein solches Fahrrad mit Gangschaltung so weiterzuentwickeln, daß eine wesentliche Vereinfachung der Konstruktion der Hinterradnabe ermöglicht wird. Erfindungsgemäß wird diese Aufgabe dadurch gelöst, daß das Hinterrad des Fahrrades direkt auf der Abtriebswelle des Hauptgetriebes befestigt ist, so daß diese gleichzeitig die Achse des Hinterrades bildet. Erfindungsgemäß ist es nämlich nicht mehr notwendig, eine feststehende Hinterradachse vorzusehen.

Wegen der einfachen Bauweise und um eine möglichst große Anzahl von Schaltstufen (Gängen) zur Verfügung zu stellen, ist es besonders bevorzugt, beide Getriebe als mehrstufige Stirnrad-Ziehkeil-Schaltungen auszubilden. Durch die Verwendung eines Umlenkgetriebes und eines Hauptgetriebes wird ja wieder die richtige Drehrichtung des Getriebes bereitgestellt, ohne daß die komplizierten Konstruktionen herkömmlicher Nabenschaltungen, beispielsweise Planetengetriebe, Verwendung finden müssen.

Nachdem es erfindungsgemäß nicht mehr notwendig ist, das Übersetzungsverhältnis von Tretkurbelwelle zu Hinterradnabe mittels eines sehr großen Kettenrades an der Tretkurbelwelle und eines sehr kleinen Kettenritzels an der Hinterradnabe herzustellen, kann vorteilhafterweise auf den pflegebedürftigen und wegen der Verschmutzungsgefahr unbeliebten Kettenantrieb verzichtet werden. Statt dessen kann die Kraftübertragung über einen Zahnriemen und zwei nahezu gleich große Riemenscheiben erfolgen, von denen eine mit der Tretkurbelwelle verbunden ist, und die andere mit der Antriebswelle des Umlenkgetriebes verbunden ist.

Die für ein Fahrrad ebenfalls erforderliche Freilaufvorrichtung kann bei der vorliegenden Erfindung natürlich an den verschiedensten Stellen vorgesehen werden, beispielsweise beim Übergang von dem hinteren Kettenritzel bzw. der hinteren Riemenscheibe auf die Antriebswelle des Umlenkgetriebes. Besonders bevorzugt ist es aber, den abtriebsseitigen Stirnradsatz gemeinsam drehbar auf der Abtriebswelle des Hauptgetriebes koaxial zu dieser zu lagern, und eine Freilaufvorrichtung zwischen dem Stirnradsatz und der Abtriebswelle anzuordnen.

Hinsichtlich der konstruktiven Gestaltung ist es dabei besonders bevorzugt, die Freilaufvorrichtung unter dem größten Rad des Stirnradsatzes der Abtriebswelle anzuordnen.

Die bisher bekannten Fahrradgetriebe (Nabenschaltung oder Kettenschaltung) weisen den Nachteil auf, daß sie regelmäßig gefettet oder geölt werden müssen. Diese Arbeit ist zeitaufwendig und umständlich. Wird sie nicht durchgeführt, weisen die bekannten Schaltungen einen hohen Kraftverlust durch Reibung auf. Es ist daher erfindungsgemäß besonders bevorzugt, das Umlenkgetriebe und das Hauptgetriebe in einem gemeinsamen, dichten, ölgefüllten Getriebegehäuse zusammenzufassen. Auf diese Weise ist eine perfekte Schmierung sichergestellt. Die Pflege wird wesentlich vereinfacht, da lediglich ein gelegentlicher Wechsel des Getriebeöls erforderlich ist. Dies ist wesentlich weniger Arbeitsaufwand, als eine Kette zu schmieren, oder die entsprechenden Instandhaltungsarbeiten an einer Nabenschaltung durchzuführen.

Von der konstruktiven Gestaltung her ist es besonders bevorzugt, das Umlenkgetriebe außerhalb und das Hauptgetriebe innerhalb der Hinterradnabe anzuordnen.

Besonders bevorzugt läßt sich bei dem erfindungsgemäßen Fahrrad die Verbindung zwischen Hinterradlagerung und Fahrradrahmen mittels einer Einarmschwinge verwirklichen. Damit wird es möglich, ein Fahrrad komfortabel zu federn, ohne großen konstruktiven Aufwand treiben zu müssen. Das Getriebegehäuse wird dann im wesentlichen innerhalb der Radnabe angeordnet und es ragt lediglich an der Seite, an der der Antrieb erfolgt, aus der Radnabe heraus und wird dann mittels einer Einarmschwinge mit dem Rahmen des Fahrrades verbunden.

Bei dieser Konstruktion läßt sich sehr vorteilhaft eine Scheibenbremse als Bremsvorrichtung für das Hinterrad anbringen. Es wird dann auf der Seite der Hinterradschwinge an der Hinterradnabe eine Bremsscheibe befestigt, die mit einer an der Schwinge befestigten Bremszange als Scheibenbremse zusammenwirkt.

Bei geschickter Konstruktion braucht das Hauptgetriebe nicht den gesamten, innerhalb der Nabe zur Verfügung stehenden Platz. Es kann dann vorteilhafterweise innerhalb der Nabe neben dem Getriebegehäuse an diesem eine Trommelbremsvorrichtung angebracht werden, die auf die innere Oberfläche der Nabe wirkt. Auf diese Weise kann eine im Gegensatz zu der vorgenannten Scheibenbremse völlig vor Witterungseinflüssen geschützte Bremsvorrichtung für das Hinterrad geschaffen werden. Dabei kann auch eine Bremsenauslösung mittels Rücktritt wie bei den konventionellen Nabenschaltungen vorgesehen werden. Das Fahrgefühl ist dann dasselbe, wie bei den konventionellen Fahrrädern mit Nabenschaltung. Es besteht nicht die Gefahr, daß man in einer Schrecksituation (wie dies bei Kettenschaltungen häufig passiert) erst einmal nach rückwärts ins Leere tritt, bevor man sich wieder daran erinnert, daß man ja nur mit Handhebeln bremsen kann.

Der neben dem Hauptgetriebe noch zur Verfügung stehende Raum kann vorteilhafterweise auch dazu genutzt werden, dort einen Generator für die Lichtanlage des Fahrrads anzubringen. Auf diese Weise kann auf den beschädigungs- und störungsanfälligen Dynamo am Vorderrad verzichtet werden. Es wird dann innerhalb der Nabe neben dem Getriebegehäuse an diesem ein Spulensatz koaxial zur Nabe drehbar gelagert, und gegenüber dem Spulensatz an der Nabe entsprechende Dauermagneten angeordnet, so daß der Spulensatz und die Dauermagneten zusammen einen selbsterregten elektrischen Generator bilden, wobei zum Einschalten des Generators eine Vorrichtung zum Festhalten des Spulensatzes am Getriebegehäuse und eine Stromabnehmervorrichtung vorgesehen ist. Auf diese Weise bremst der erfindungsgemäße Generator das Rad nicht, wenn kein Licht benötigt wird. Dies ist ein großer Vorteil gegenüber den bisher bekannten Nabendynamos, die aufgrund der Polwirkung der Dauermagneten auch unbelastet eine starke Bremswirkung ausüben, was natürlich beim Fahrradfahren sehr unangenehm ist. Gemäß der vorliegenden Erfindung läuft jedoch der Spulensatz mit der Habe mit und wird nur festgehalten, wenn Strom erzeugt werden muß. Auf diese Weise entfällt der sonst lästige dauernde Bremseffekt.

Zur Übertragung des Stromes von der im Leerlauf mit der Nabe mit rotierenden Spule auf das feststehende Getriebegehäuse kann eine Stromabnehmervorrichtung als Schleiffeder vorgesehen sein, die auf einem am Gehäuse befestigten Schleifring läuft. Dabei besteht noch der Vorteil, daß im Falle der Stromabnahme der Spulensatz gegenüber dem Gehäuse festgehalten ist. Die Stromabnehmervorrichtung wird also nur belastet, während sie steht. Eine elektrische Belastung unter Bewegung findet nicht statt. Entsprechend kann die Stromabnehmervorrichtung wesentlich kleiner ausgeführt werden.

Darüber hinaus läßt sich besonders bevorzugt die Stromabnehmervorrichtung und die Vorrichtung zum Festhalten des Spulensatzes so kombinieren, daß der Spulensatz festgehalten wird, und gleichzeitig ein entsprechender elektrischer Kontakt hergestellt wird. Dazu dient als Stromabnehmervorrichtung und Vorrichtung zum Festhalten des Spulensatzes eine Nase aus elektrisch leitendem Material an dem Spulensatz und ein isolierend am Getriebegehäuse gelagerter, elektrisch leitender Arm, der in eine Stellung schwenkbar ist, in der er den Spulensatz festhält und gleichzeitig als Ableitung für den erzeugten Strom dient.`

Erfindungsgemäß kann ebenfalls ein fremd erregter Generator vorgesehen werden. Dieser hat auch den Vorteil, daß er im Leerlauf keine Bremswirkung auf das Fahrrad ausübt. Ein solcher fremd erregter Generator findet vorzugsweise dann Verwendung, wenn das Fahrrad mit einer richtigen Lichtanlage ausgerüstet werden soll, bei der auch ein Beleuchtungsbetrieb im Stand möglich ist und eine Akkumulator verwendet wird. Es wird dann innerhalb der Nabe neben dem Getriebegehäuse an diesem ein Spulensatz koaxial zur Nabe angebracht und gegenüber dem Spulensatz an der Nabe ein entsprechender weiterer Spulensatz angebracht, so daß beide Spulensätze zusammen einen fremd erregten elektrischen Generator bilden, wobei eine Stromübertragungsvorrichtung vorgesehen ist, über die der weitere Spulensatz mit Erregerstrom versorgt wird. Ein solcher Generator hat den Vorteil, daß man ihn bei Verwendung einer akkugepufferten Lichtanlage nur beim Bergabfahren und Bremsen einschaltet, wobei sowieso eine Bremswirkung erwünscht ist. Während der Fahrt ist die sonst übliche Bremswirkung des Dynamos sowieso unerwünscht, der Stromverbrauch der Beleuchtung kann während dieser Zeit jedoch aus dem Akkumulator gedeckt werden.

Weiterhin kann der innerhalb der Nabe erfindungsgemäß zur Verfügung stehende Platz auch dazu genutzt werden, innerhalb der Nabe neben dem Getriebegehäuse an diesem einen elektrischen Nabenmotor anzubringen. Auf diese Weise kann ein elektrischer Hilfsmotor unauffällig in die Fahrradnabe integriert werden. Dort ist er am besten vor Beschädigungen geschützt und stört nicht.

Im folgenden sollen Ausführungsbeispiele der Erfindung anhand der beigefügten Zeichnungen erläutert werden. Es zeigt:
**Figur 1** den gesamten Kraftübertragungsstrang von der Tretkurbelwelle zum Hinterrad mit der entsprechenden Hinterradaufhängung als schnittdarstellung von oben;
**Figur 2** eine Hinterradnabe und deren Aufhängung an einer Einarmschwinge für ein erfindungsgemäßes Fahrrad als teilweise Schnittdarstellung von oben;
**Figur 3** eine Hinterradnabe für ein erfindungsgemäßes Fahrrad mit Schaltgetriebe, nabenintegriertem, fremd erregtem elektrischen Generator, Scheibenbremse und Riemenscheibe als Schnittdarstellung von oben;
**Figur 4** die Konstruktion gemäß Figur 3 mit selbst erregtem Generator als Schnittdarstellung von oben;
**Figur 5** eine Hinterradnabe für das erfindungsgemäße Fahrrad mit einer integrierten Trommelbremse;
**Figur 6** eine Schnittdarstellung der Hinterradnabe eines erfindungsgemäßen Fahrrades mit konventioneller Befestigung des Hinterrades mit einer feststehenden Hinterradachse von oben; und
**Figur 7** eine Schnittdarstellung einer besonders stark miniaturisierten erfindungsgemäßen Getriebeanordnung.

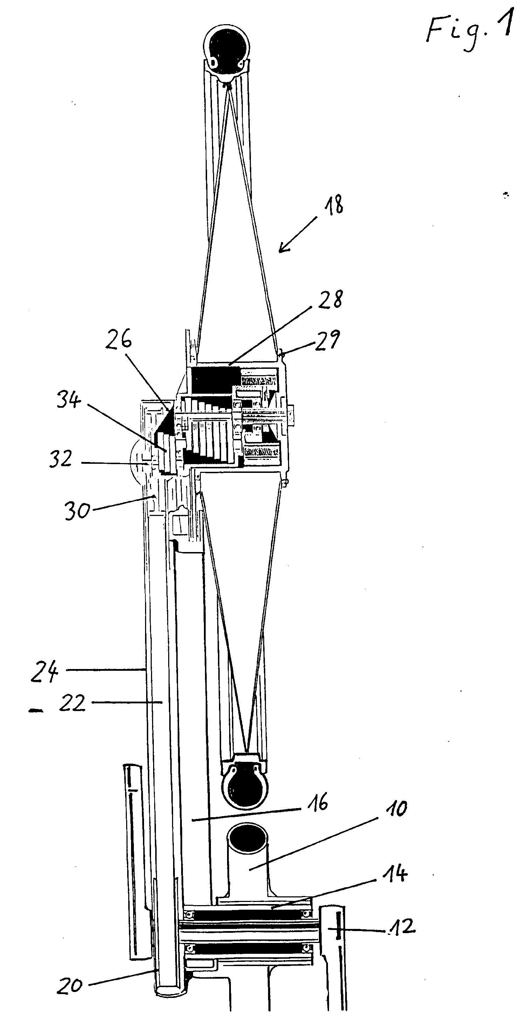

Figur 1 zeigt den gesamten Antriebsstrang eines erfindungsgemäßen Fahrrades und eine bevorzugte Aufhängung des Hinterrades. An einem Fahrradrahmen 10 ist an der üblichen Stelle eine Tretkurbel 12 gelagert. Die Lagerung der Tretkurbel ist von einer weiteren Lagerung 14 für eine Einarmschwinge 16 koaxial umschlossen. An der Einarmschwinge 16 ist das Hinterrad 18 aufgehängt. Die Tretkurbel 12 trägt statt des konventionellen Kettenrades an der Seite, an der die Einarmschwinge 16 sich erstreckt, außerhalb der Einarmschwinge 16 eine Riemenscheibe 20 für einen Zahnriemen 22. Dieser ist von einem Zahnriemengehäuse 24 vollständig umschlossen. Die Einarmschwinge 16 trägt an ihrem hinteren Ende ein Getriebegehäuse 26, auf dem auch die Nabe 28 des Hinterrades 18 gelagert ist, wobei sich das Getriebegehäuse teilweise in die Hinterradnabe 28 hinein erstreckt. Der Zahnriemen 22 treibt eine Riemenscheibe 30 an, die auf der Antriebswelle 32 eines Umlenkgetriebes 34 befestigt ist. Dieses Umlenkgetriebe 34 befindet sich in dem Getriebegehäuse 26 und die Antriebswelle 32 des Umlenkgetriebes 34 ist in dem Getriebegehäuse 26 kugelgelagert. An der Nabe 28 des Hinterrades sind übliche Befestigungsvorrichtungen 29 für die Speichen des Hinterrades angebracht.

Die beiden Zahnriemenscheiben 20 und 30 sind vorzugsweise nahezu gleich groß. Zahnriemen und Riemenscheibe sind durch das Gehäuse 24 vollständig gekapselt.

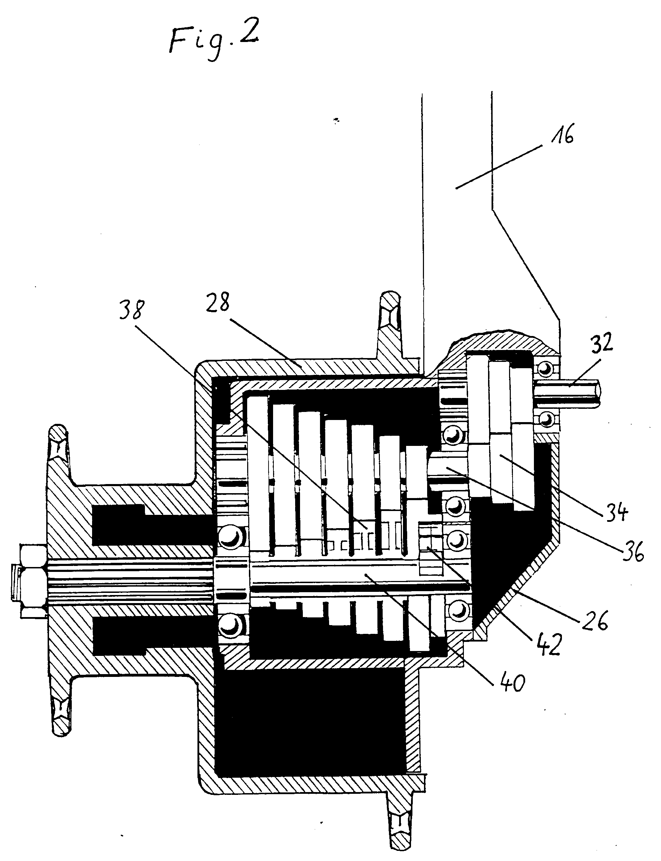

Die Darstellung der einzelnen erfindungsgemäßen Varianten für das Getriebe und die Nebenaggregate in der Hinterradnabe erfolgt anhand der folgenden Figuren 2 bis 5.

Figur 2 zeigt die einfachste Ausführungsform für das erfindungsgemäße Fahrradgetriebe. Es ist die Einarmschwinge 16 dargestellt, die das Getriebegehäuse 26 trägt. Das Getriebegehäuse 26 erstreckt sich in die Nabe 28 des Hinterrades 18 hinein.

An der Seite der Einarmschwinge 16 erstreckt sich die Antriebswelle 32 für das Umlenkgetriebe 34 nach außen. Es ist hier nicht dargestellt, ob auf der Antriebswelle 32 des Umlenkgetriebes 34 eine Riemenscheibe oder ein konventionelles Kettenritzel angebracht ist. Man kann nämlich die Vorteile des erfindungsgemäßen Fahrradgetriebes auch teilweise in Verbindung mit einem konventionellen Kettenantrieb des Hinterrades nutzen.

Das Umlenkgetriebe 34 ist hier als dreistufiges StirnradKugelziehkeil-Getriebe dargestellt. Zur Vereinfachung sind die zu der Betätigung der Getriebe erforderlichen Bowdenzüge jeweils weggelassen.

Das Umlenkgetriebe 34 kann natürlich auch mit mehr oder weniger Schaltstufen ausgeführt werden. Insbesondere kann es natürlich auch als nichtschaltbares einfaches Umlenkgetriebe ausgeführt sein, wenn nicht so viele Schaltstufen gewünscht werden. Die Abtriebswelle 36 des Umlenkgetriebes 34 bildet gleichzeitig die Antriebswelle des Hauptgetriebes 38. Das Hauptgetriebe 38 ist hier als siebenstufiges Stirnrad-Ziehkeil-Getriebe ausgebildet, wobei die Schaltung antriebsseitig erfolgt. Natürlich können auch mehr oder weniger Getriebestufen vorgesehen sein.

Der abtriebsseitige, verbundene Stirnradsatz des Hauptgetriebes 38 ist drehbar auf der Abtriebswelle 40 des Hauptgetriebes 38 koaxial zu dieser gelagert. Die Kraftverbindung zwischen dem Stirnradsatz und der Abtriebswelle 40 des Hauptgetriebes 38 erfolgt über eine konventionelle Freilaufvorrichtung 42, die unter dem größten Zahnrad des Stirnradsatzes angeordnet ist.

In der vorliegenden Ausführungsform stellt die Abtriebswelle 40 gleichzeitig die drehende Radachse des Hinterrads 18 dar.

Das Getriebegehäuse 26 ist hier als dichtes, ölgefülltes Getriebegehäuse ausgebildet, und umschließt so das Umlenkgetriebe 34 und das Hauptgetriebe 38. Die Anordnung ist hier so gewählt, daß sich das Umlenkgetriebe 34 außerhalb der Radnabe 28 auf Höhe der Einarmschwinge 16 befindet, während das Hauptgetriebe 38 innerhalb der Radnabe 28 angeordnet ist.

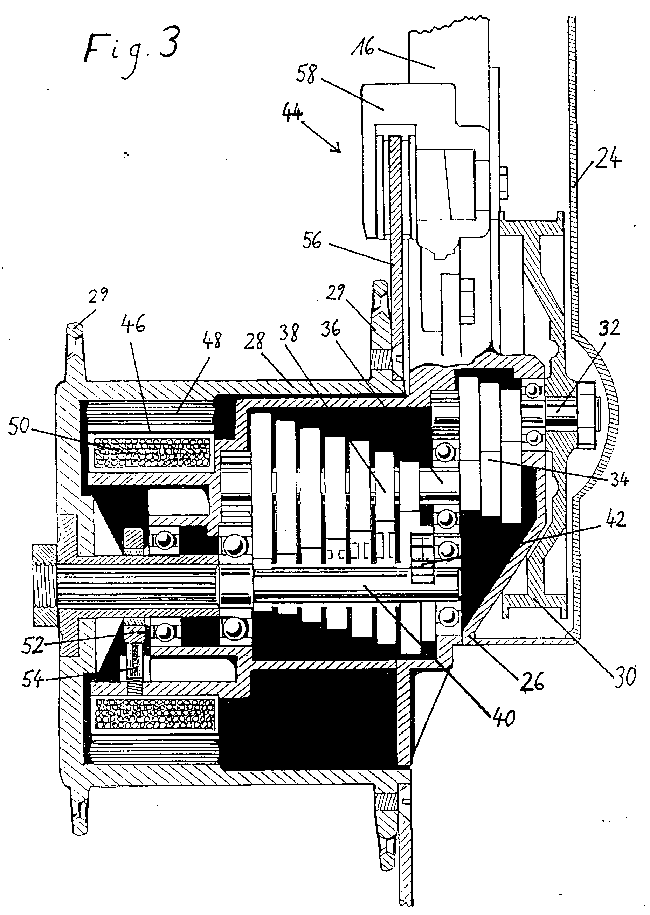

Figur 3 zeigt eine weitere erfindungsgemäße Ausführungsform, wobei hier gegenüber der Figur 2 zusätzlich eine Scheibenbremsvorrichtung 44 und ein fremd erregter Generator 46 vorgesehen ist.

In dieser Figur 3 ist die hintere Riemenscheibe 30 für den Zahnriemenantrieb und deren Verkleidung 24 nochmals größer dargestellt. Die Verkleidung 24 für den Zahnriemen 22 schließt hier direkt mit der Außenseite des Getriebegehäuses 26 ab.

In Figur 3 ist dargestellt, wie der zusätzliche Platz, der in der Nabe neben dem Hauptgetriebe 38 verbleibt, genutzt werden kann. Hier ist ein fremd erregter elektrischer Generator 46 angebracht. Er besteht aus einem Spulensatz 48, der auf der Innenseite der Nabe koaxial angeordnet ist. Diesem stehen koaxial entsprechende Spulen 50 gegenüber, die an dem Getriebegehäuse 26 befestigt sind. Zur Stromübertragung ist an der Welle 40 ein Schleifring 52 befestigt, der mit einer am Getriebegehäuse 26 befestigten Schleiffeder oder Kohle 54 zusammenwirkt.

Die Scheibenbremsvorrichtung 44 ist dergestalt aufgebaut, daß an der Radnabe 28 außerhalb der Befestigungsvorrichtungen 29 für die Speichen des Fahrrades auf der der Einarmschwinge 16 zugewandten Seite eine Bremsscheibe 56 mit der Radnabe 28 verbunden ist. Die Bremsscheibe 56 wird von einem Bremssattel 58 umgriffen, der an der Einarmschwinge 16 befestigt ist. Der Bremssattel 58 ist dabei wie bei Scheibenbremsen üblich ausgebildet. Die Bremsbetätigung kann entweder über Bowdenzüge oder hydraulisch erfolgen.

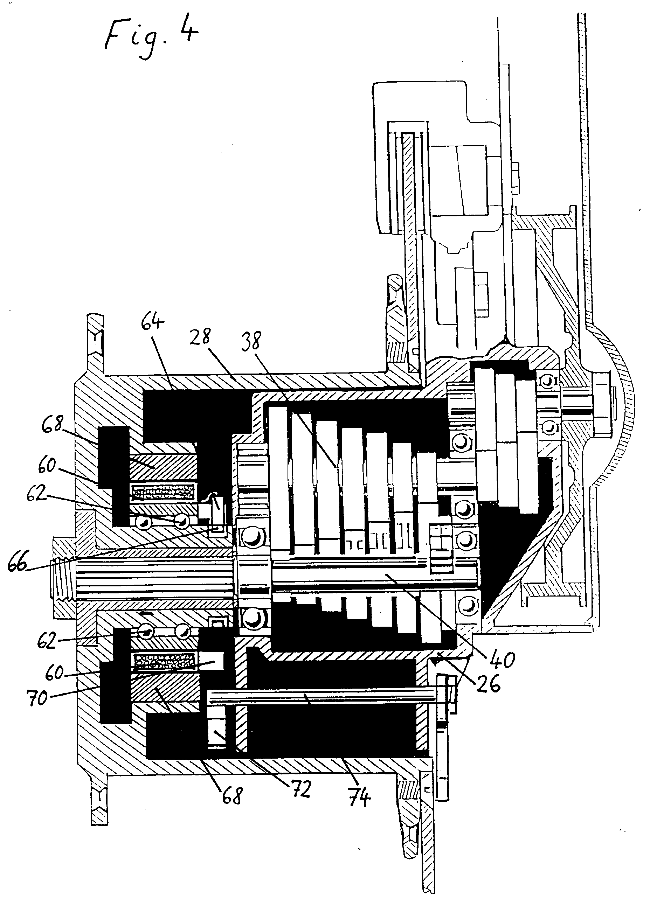

Figur 4 stellt eine weitere Ausführungsform dar, bei der ein selbst erregter Generator Verwendung findet. Dazu sind Spulen 60 mittels Kugellagern 62 auf der Abtriebswelle 40 des Hauptgetriebes 38 koaxial drehbar gelagert. Zur Abführung des erzeugten Stroms ist eine Schleiffeder oder Kohle 64 vorgesehen, die mit einem an dem Getriebegehäuse isoliert befestigten Schleifring 66 zusammenwirkt. Gegenüber den Spulen 60 sind koaxial Dauermagnete 68 angeordnet.

An den Spulen 60 ist eine Nase 70 angebracht. Im hier dargestellten Fall des Leerlaufs drehen sich die Spulen 60 auf den Lagern 62 durch die von den Polen der Magnete 68 ausgehende Wirbelstromwirkung mit der Radnabe 28 mit. Es entsteht praktisch keine Bremswirkung auf das Rad. Wenn die Beleuchtung in Betrieb genommen werden soll, müssen die Spulen gegenüber der Nabe festgehalten werden. Dazu dient die Nase 70. Sie kann durch einen Arm 72 festgehalten werden, der in ihre Umlaufbahn schwenkbar ist. Dazu ist der Arm 72 an einer Achse 74 befestigt, die in dem Getriebegehäuse 26 drehbar gelagert ist. Die Achse 74 kann dann durch einen außen am Getriebegehäuse angebrachten Hebel oder aber durch einen Bowdenzug vom Lenker aus betätigt werden. Dadurch wird auch das Ein- und Ausschalten des Lichtes wesentlich komfortabler. Bisher mußte ja dazu immer der Dynamo mühsam auf das Vorderrad geklappt oder von diesem weggekippt werden.

Es ist auch ein Verzicht auf die Schleiffedern oder Kohlen 64 und den Schleifring 66 denkbar, indem die Achse 74 elektrisch isolierend gelagert wird, und die Nase 70, der Arm 72 und die Achse 74 aus elektrisch leitendem Material hergestellt wird. Dann kann der Strom über die Achse 74 abgenommen werden. Erfindungsgemäß ist ja eine Stromabnahme nur dann möglich, wenn die Spulen 60 sowieso durch den Arm 72 gegenüber dem Getriebegehäuse 26 festgesetzt sind.

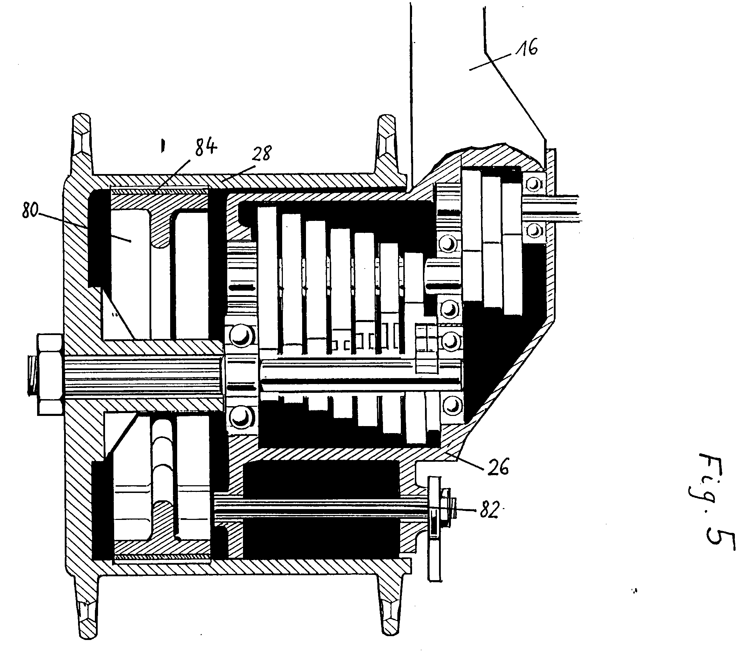

Figur 5 zeigt eine weitere Ausführungsform des Getriebes für das erfindungsgemäße Fahrrad. Dabei ist der in der Nabe verbleibende Platz dazu genutzt, dort eine Trommelbremsvorrichtung anzuordnen. Dabei sind die Bremsbacken 80 an dem Getriebegehäuse 26 gelagert, und die Bremsbetätigung erfolgt über eine im Getriebegehäuse 26 drehbar gelagerte Achse 82. Auf den Bremsbacken 80 sind wie üblich Bremsbeläge 84 angebracht. Diese wirken auf die Innenseite der Nabe 28, die hier gleichzeitig als Bremstrommel dient. Hier kann die Bremsbetätigung über Bowdenzüge vom Lenker aus erfolgen. Ebenso ist aber auch eine Bremsbetätigung durch Rücktritt möglich.

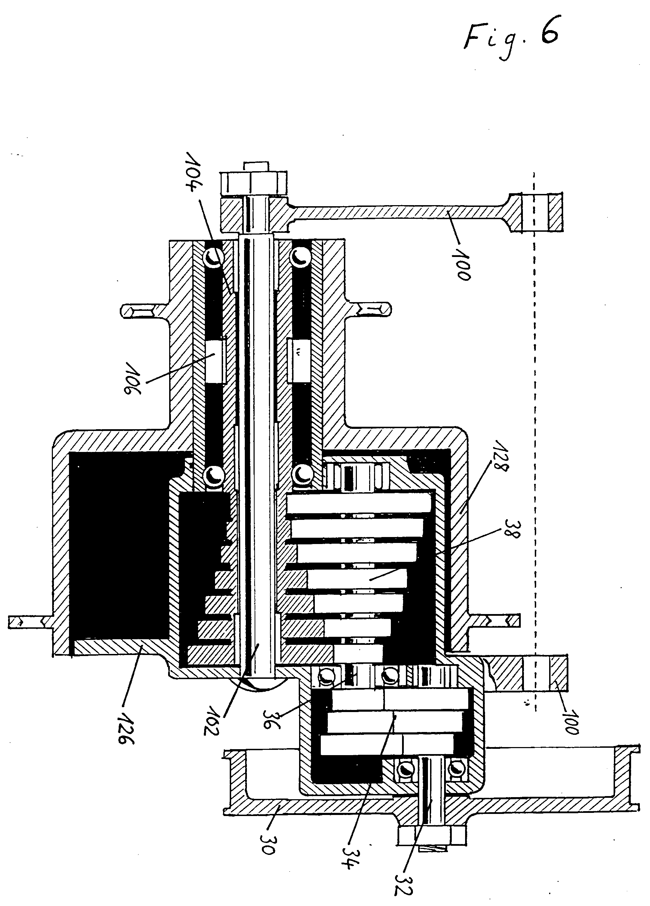

Figur 6 stellt schließlich eine Ausführungsform dar, bei der das erfindungsgemäße Getriebe in Verbindung mit einem konventionellen Fahrradrahmen verwendet werden kann. Dabei umgreift eine hintere Gabel 100 das Hinterrad beidseitig und trägt das Getriebegehäuse 126. Auch hier erfolgt jedoch der Antrieb über einen Zahnriemen, dementsprechend ist eine Zahnriemenscheibe 30 auf der Antriebsachse 32 des Umlenkgetriebes 34 angeordnet. Auch hier erfolgt der Abtrieb des Umlenkgetriebes 34 und der Antrieb des Hauptgetriebes 38 über eine gemeinsame Welle 36. Da aber aufgrund der konventionellen Fahrradkonstruktion eine feststehende Hinterradachse 102 vorgesehen sein muß, die die beiden Enden der Hinterradgabel 100 verbindet, weicht der übrige Aufbau des Getriebes 38 etwas ab.

Das Getriebegehäuse 126 ist auf der Seite des Zahnriemenantriebs mit der Hinterradgabel 100 verbunden und trägt die darin feststehende Hinterradachse 102. Diese wird auf der gegentiberliegenden Seite von dem gegenüberliegenden Ende der Hinterradgabel 100 getragen. Der abtriebsseitige verbundene Stirnradsatz des Hauptgetriebes 38 ist hier auf der feststehenden Hinterradachse 102 koaxial drehbar gelagert und setzt sich in einer Hohlwelle 104 fort, die fest mit dem Stirnradsatz verbunden ist. Diese Hohlwelle 104 ist ebenfalls auf der Hinterradachse 102 drehbar gelagert. Die Kraftübertragung von der Hohlwelle 104 auf die Hinterradnabe 128 erfolgt über eine Freilaufvorrichtung 106.

Im Gegensatz zu den Ausführungsformen unter Figuren 1 bis 5 ist hier die Hinterradnabe 128 auch an der dem Antrieb gegenüberliegenden Seite offen. Dort ragt nämlich die Hinterradachse 102 heraus.

Mit der Vorrichtung gemäß Figur 6 ist es möglich, auch bereits vorhandene Fahrräder und Fahrradrahmen mit dem erfindungsgemäßen Getriebe und bei Bedarf auch mit dem erfindungsgemäßen Zahnriemenantrieb nachzurüsten.

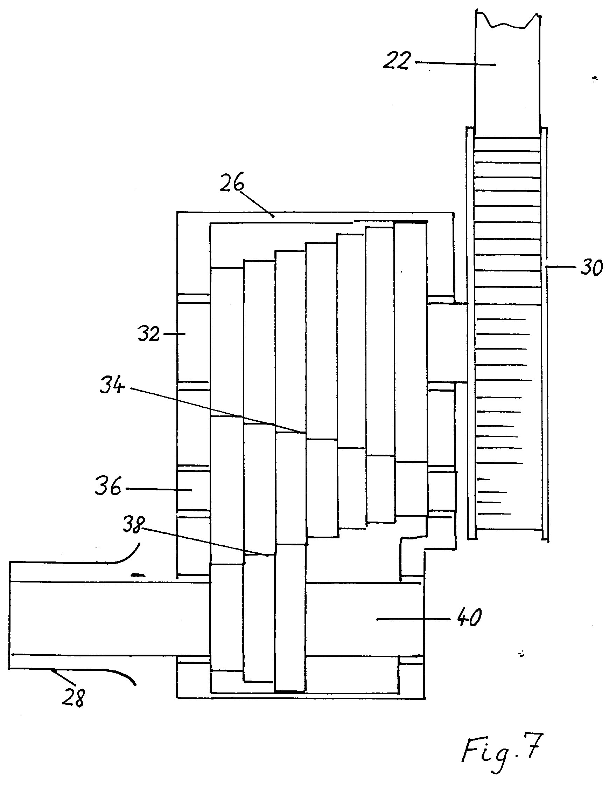

Figur 7 zeigt eine weitere, besonders bevorzugte Ausführungsform für das erfindungsgemäße Getriebe. Dabei ist eine weitere Miniaturisierung der Getriebeanordnung vorgenommen worden, wodurch auch erheblich Gewicht eingespart werden kann. In diesem Fall treibt die Riemenscheibe 30 ebenfalls die Antriebswelle 32 des Umlenkgetriebes 34 an. Die Schaltung des Umlenkgetriebes erfolgt in diesem Fall durch selektives Kuppeln der einzelnen, auf der Antriebswelle 32 des Umlenkgetriebes 34 angebrachten Zahnräder. In diesem Fall sind sieben Zahnräder und damit sieben Schaltstufen bereits beim Umlenkgetriebe vorgesehen. Diese Zahnräder des Umlenkgetriebes kämmen alle mit den auf der Abtriebsachse 36 des Umlenkgetriebes fest angeordneten sieben Zahnrädern. Das Hauptgetriebe 38 ist hier mit weniger Schaltstufen ausgeführt, im dargestellten Falle sind nur drei Schaltstufen vorgesehen. Diese werden durch drei mit den größten Zahnrädern auf der Welle 36 kämmenden Zahnrädern dargestellt, wobei diese Zahnräder zur Schaltung des Hauptgetriebes 38 selektiv mit der Abtriebswelle 40 gekuppelt werden. Auf dieser Abtriebswelle 40 ist gleichzeitig die Hinterradnabe 28 befestigt. Mit der dargestellten Ausführungsform lassen sich insgesamt 21 Gänge schalten. Falls es gewünscht ist, können jedoch auch für das Hauptgetriebe nochmals sieben Gänge vorgesehen werden, indem einfach weitere Zahnräder selektiv kuppelbar auf der Abtriebswelle 40 vorgesehen werden. Auf diese Weise lassen sich bis zu 7 x 7 = 49 Gänge realisieren, die im Gegensatz zum Kettenantrieb des Fahrrads auch alle tatsächlich zur Verfügung stehen und schaltbar sind, da es ja bei der erfindungsgemäßen Schaltung keine Kettenlaufprobleme gibt.

Sämtliche aus der Beschreibung, den Ansprüchen und Zeichnungen hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

## Patentansprüche

1. Fahrrad mit Gangschaltung, bei dem die Kraftübertragung von der Tretkurbelwelle auf das Hinterrad über ein Umlenkgetriebe (34) erfolgt und ein mehrstufiges, schaltbares Hauptgetriebe (38) erfolgtund eine gemeinsame Welle (36) als Abtriebswelle des Umlenkgetriebes (34) und als Antriebswelle des Hauptgetriebes (38) dient, **dadurch gekennzeichnet**, daß das Hinterrad des Fahrrades direkt auf der Abtriebswelle (40) des Hauptgetriebes (38) befestigt ist, so daß diese gleichzeitig die Achse des Hinterrades bildet.

2. Fahrrad nach Anspruch 1, **dadurch gekennzeichnet**, daß die Getriebe (34, 38) als Stirnrad-Ziehkeil-Schaltungen ausgebildet sind.

3. Fahrrad nach einem der vorhergehenden Ansprüche, **dadurch gekennzeichnet**, daß die Kraftübertragung weiter über einen Zahnriemen (22) und zwei nahezu gleich große Riemenscheiben (20, 30) erfolgt, von denen eine (20) mit der Tretkurbelwelle verbunden ist, und die andere mit der Antriebswelle (32) des Umlenkgetriebes (34) verbunden ist.

4. Fahrrad nach Anspruch 1, **dadurch gekennzeichnet**, daß der abtriebsseitige verbundene Stirnradsatz des Hauptgetriebes (38) koaxial zu diser gelagert ist, und eine Freilaufvorrichtung (42) zwischen dem Stirnradsatz und der Abtriebswelle (40) angeordnet ist.

5. Fahrrad nach Anspruch 4, **dadurch gekennzeichnet**, daß die Freilaufvorrichtung (42) unter dem größten Rad des Stirnradsatzes des Hauptgetriebes (38) angeordnet ist.

6. Fahrrad nach einem der vorhergehenden Ansprüche, **dadurch gekennzeichnet**, daß Umlenkgetriebe (34) und Hauptgetriebe (38) in einem gemeinsamen, dichten, ölgefüllten Getriebegehäuse (26) zusammengefaßt sind.

7. Fahrrad nach einem der vorhergehenden Ansprüche, **dadurch gekennzeichnet**, daß das Umlenkgetriebe (34) außerhalb und das Hauptgetriebe (38) innerhalb der Hinterradnabe (28) angeordnet ist.

8. Fahrrad nach Anspruch 1 und 6, **dadurch gekennzeichnet**, daß das Getriebegehäuse (26) im wesentlichen innerhalb der Radnabe (28) angeordnet ist und lediglich an der Seite, an der der Antrieb erfolgt, aus der Radnabe (28) herausragt und mittels einer Einarmschwinge (16) mit dem Rahmen (10) des Fahrrads verbunden ist.

9. Fahrrad nach Anspruch 8, **dadurch gekennzeichnet**, daß auf der Seite der Schwinge (16) an der Nabe (28) eine Bremsscheibe (56) befestigt ist, die mit einer an der Schwinge (16) befestigten Bremszange (58) als Scheibenbremse (44) zusammenwirkt.

10. Fahrrad nach Anspruch 1, **dadurch gekennzeichnet**, daß innerhalb der Nabe (28) neben dem Getriebegehäuse (26) an diesem eine Trommelbremsvorrichtung (80, 84) angebracht ist, die auf die innere Oberfläche der Nabe (28) wirkt.

11. Fahrrad nach Anspruch 1, **dadurch gekennzeichnet**, daß innerhalb der Nabe (28) neben dem Getriebegehäuse (26) an diesem ein Spulensatz (60) koaxial zur Nabe (28) drehbar gelagert ist, und gegenüber dem Spulensatz (60) an der Nabe (28) entsprechende Dauermagneten (68) angeordnet sind, so daß der Spulensatz (60) und die Dauermagneten (68) zusammen einen selbsterregten elektrischen Generator bilden, wobei zum Einschalten des Generators eine Vorrichtung (70, 72, 74) zum Festhalten des Spulensatzes (60) am Getriebegehäuse (26) und eine Stromabnehmervorrichtung vorgesehen ist.

12. Fahrrad nach Anspruch 11, **dadurch gekennzeichnet**, daß die Stromabnehmervorrichtung als Schleiffeder (64) ausgebildet ist, die auf einem am Gehäuse befestigten Schleifring (66) läuft.

13. Fahrrad nach Anspruch 12, **dadurch gekennzeichnet**, daß als Stromabnehmervorrichtung und als Vorrichtung zum Festhalten des Spulensatzes (60) eine Nase (70) aus elektrisch leitendem Material an dem Spulensatz (60) und ein isoliert am Getriebegehäuse (26) gelagerter, elektrisch leitender Arm (72) vorgesehen ist, der in eine Stellung schwenkbar ist, in der er den Spulensatz (60) festhält und gleichzeitig als Ableitung für den erzeugten elektrischen Strom dient.

14. Fahrrad nach Anspruch 1, **dadurch gekennzeichnet**, daß innerhalb der Nabe (28) neben dem Getriebegehäuse (26) an diesem ein Spulensatz (50) koaxial zur Nabe (28) angebracht ist und gegenüber dem Spulensatz (50) an der Nabe (28) ein entsprechender weiterer Spulensatz (48) angeordnet ist, so daß beide Spulensätze (48, 50) zusammen einen fremderregten elektrischen Generator (46) bilden, wobei eine Stromübertragungsvorrichtung (52, 54) vorgesehen ist, über die der weitere Spulensatz (48) mit Erregerstrom versorgt wird.

15. Fahrrad nach Anspruch 1, **dadurch gekennzeichnet**, daß innerhalb der Nabe (28) neben dem Getriebegehäuse (26) an diesem ein elektrischer Nabenmotor angebracht ist.

## Claims

1. Bicycle with a change-speed gear arrangement wherein the transmission of power from the pedal crank spindle to the rear wheel is by way of a direction-changing transmission means (34) and a multi-stage shiftable main transmission means (38), and wherein a common shaft (36) serves as the driven shaft of the direction-changing transmission means (34) and as the drive shaft of the main transmission means (38) characterized in that the rear wheel is fixed directly on the driven shaft (40) of the main transmission means (38), so that at the same time said driven shaft forms the spindle of the rear wheel.

2. Bicycle according to claim 1, characterized in that the transmission means (34, 38) are in the form of a spur geardraw key shift arrangement.

3. Bicycle according to one of the preceding claims, characterized in that the transmission of force is further by way of a toothed belt (22) and two belt pulleys (20, 30) of almost equal size, one (20) of them being connected to the pedal crank spindle and the other being connected to the drive shaft (32) of the direction-changing transmission means (34).

4. Bicycle according to claim 1, characterized in that the spur gear set on the drive output side of the main transmission means (38) is rotatably mounted on the driven shaft of the main transmission means coaxially with respect thereto, and a freewheel means (42) is disposed between the spur gear set and the output shaft (40).

5. Bicycle according to claim 4, characterized in that said freewheel means (42) is disposed under the largest gear of said spur gear set of the main transmission means (38).

6. Bicycle according to one of the preceding claims, characterized in that the direction-changing transmission means (34) and the main transmission means (38) are arranged in a common sealed oil-fillable transmission housing (26).

7. Bicycle according to one of the preceding claims, characterized in that the direction changing transmission means (34) is disposed outside and the main transmission means (38) is disposed within the rear wheel hub (28).

8. Bicycle according to claim 1 and 6, characterized in that the transmission housing (26) is arranged substantially within the wheel hub (28) and projects out of the wheel hub (28) only at the side at which the drive is provided and that it is connected to the bicycle frame (10) by means of a single-sided swing arm (16).

9. Bicycle according to claim 8, characterized in that a brake disk (56) is fixed to the hub (28) on the side towards the swing arm (16) and that it co-operates with a brake caliper (58) fixed on the swing arm (16) to constitute a disk brake (44).

10. Bicycle according to claim, characterized in that a drum brake means (80, 84) is disposed within the hub (28) beside the transmission housing (26) on same, which co-operates with the inside surface of the hub (28).

11. Bicycle according to claim 7, characterized in that a coil means (60) is rotatably mounted within the hub (28) beside the transmission housing (26) on the same coaxially with respect to the hub (26) and corresponding permanent magnets (68) are arranged opposite the coil means (60) on the hub (28) so that the coil means (60) and the permanent magnets (68) together form a self-excited electrical generator, and that for switching on the generator a means (70, 72, 74) for securing the coil means (60) to the transmission housing (20) and a current pick-up means are provided.

12. Bicycle according to claim 11, characterized in that the current pick-up means is in the form of a spring slip brush member (64) running on a slip ring (66) fixed to the housing.

13. Bicycle according to claim 12, characterized in that the current pick-up means and the means for securing the coil means (60) comprise a projection (70) of electrically conductive material on the coil means (60) and an electrically conductive arm (72) which is mounted in insulated relationship on the transmission housing (26) and which is adapted to pivot into a position in which it secures the coil means (60) and serves at the same time to carry off the electrical current generated.

14. Bicycle according to claim 1, characterized in that a coil means (50) is mounted within the hub (28) beside the transmission housing (26) on the same coaxially with respect to the hub (28) and a suitable further coil means (48) is arranged opposite the first coil means (50) on the hub (28) so that both coil means (48, 50) together form a separately excited electrical generator, wherein a current transmission means (52, 54) for supplying the further coil means (48) with excitation current is provided.

15. Bicycle according to claim 1, characterized in that an electrical auxiliary motor is mounted within the hub (28) beside the transmission housing (26) on the same.

## Revendications

1. Vélo avec changement de vitesse, sur lequel la transmission de l'arbre de manivelle de pédalier à la roue arrière s'effectue par un mécanisme de renvoi (34) et un mécanisme principal (38) à plusieurs niveaux et embrayable et un arbre commun (36) sert d'arbre de sortie du mécanisme de renvoi (34) et d'arbre d'entraînement du mécanisme principal (38), **caractérisé en ce** que la roue arrière du vélo est fixée directement sur l'arbre de sortie (40) du mécanisme principal (38), de sorte que celui-ci forme en même temps l'axe de la roue arrière.

2. Vélo selon la revendication 1, **caractérisé en ce** que les mécanismes (34, 38) sont conçus comme des changements de vitesse à roue droite et clavette coulissante.

3. Vélo selon l'une quelconque des revendications précédentes, **caractérisé en ce** que la transmission de force s'effectue également par une courroie dentée (22) et deux poulies (20, 30) de grandeur pratiquement identique, dont l'une (20) est reliée à l'arbre de manivelle de pédalier et l'autre à l'arbre d'entraînement (32) du mécanisme de renvoi (34).

4. Vélo selon la revendication 1, **caractérisé en ce** que l'ensemble à roue droite côté sortie du mécanisme principal (38) est logé sur le même axe que celui-ci, et un dispositif de roue libre (42) est disposé entre l'ensemble à roue droite et l'arbre secondaire (40).

5. Vélo selon la revendication 4, **caractérisé en ce** que le dispositif de roue libre (42) est disposé sous la plus grande roue de l'ensemble à roue droite du mécanisme principal (38).

6. Vélo selon l'une quelconque des revendications précédentes, **caractérisé en ce** que le mécanisme de renvoi (34) et le mécanisme principal (38) sont regroupés dans un carter de mécanismes (26) commun, étanche et rempli d'huile

7. Vélo selon l'une quelconque des revendications précédentes, **caractérisé en ce** que le mécanisme de renvoi (34) et le mécanisme principal (38) sont disposés respectivement à l'extérieur et à l'intérieur du moyeu de roue arrière (28).

8. Vélo selon les revendications 1 et 6, **caractérisé en ce** que le carter de mécanismes (26) est disposé essentiellement à l'intérieur du moyeu de roue (28) et dépasse seulement sur le côté sur lequel s'effectue l'entraînement, et est relié au moyen d'un bras oscillant monobranche (16) au cadre (10) du vélo.

9. Vélo selon la revendication 8, **caractérisé en ce** que sur le côté du bras oscillant (16) sur le moyeu (28) est fixé un frein à disque (56), qui agit conjointement avec une tige de frein (58) fixée sur le bras oscillant (16) comme frein à disque (44).

10. Vélo selon la revendication 1, **caractérisé en ce** qu'à l'intérieur du moyeu (28), à côté du carter de mécanismes (26), est disposé sur celui-ci un dispositif de frein à tambour (80, 84) qui agit sur la surface intérieure du moyeu (28).

11. Vélo selon la revendication 1, **caractérisé en ce** qu'un ensemble de bobines (60) est logé de façon pivotante à l'intérieur du moyeu (28) à côté du carter de mécanismes (26) sur celui-ci sur le même axe que le moyeu (28), et des aimants permanents (68) appropriés sont disposés en face de l'ensemble de bobines (60) sur le moyeu (28), de sorte que l'ensemble de bobines (60) et les aimants permanents (68) forment conjointement un générateur électrique autoexcité, tout en prévoyant pour l'enclenchement du générateur un dispositif (70, 72, 74) pour le maintien de l'ensemble de bobines (60) sur le carter de mécanismes (26) et un dispositif conducteur.

12. Vélo selon la revendication 11, **caractérisé en ce** que le dispositif conducteur est conçu comme un ressortfrotteur (64) qui passe sur une bague collectrice (66) fixée sur le carter.

13. Vélo selon la revendication 12, **caractérisé en ce** que, comme dispositif conducteur et comme dispositif pour maintenir l'ensemble de bobines (60), on prévoit un taquet (70) à base de matériau électroconducteur sur l'ensemble de bobines (60) et un bras (72) logé de façon isolée sur le carter de mécanismes (26) et électroconducteur qui peut être basculé dans une position, dans laquelle il maintient l'ensemble de bobines, (60) et sert en même temps de dérivation pour le courant électrique généré.

14. Vélo selon la revendication 1, **caractérisé en ce** qu'un ensemble de bobines (50) est logé à l'intérieur du moyeu (28) à côté du carter de mécanismes (26) sur celui-ci sur le même axe que le moyeu (28) et un autre ensemble de bobines (48) approprié est disposé en face de l'ensemble de bobines (50) près du moyeu (28), de sorte que les deux ensembles de bobines (48, 50) forment ensemble un générateur (46) électrique à excitation séparée, un dispositif de transmission de courant (52, 54) étant prévu, par lequel l'autre ensemble de bobines (48) est alimenté avec du courant excitateur.

15. Vélo selon la revendication 1, **caractérisé en ce** qu'un moteur de moyeu électrique est disposé à l'intérieur du moyeu (28) à côté du carter de mécanismes (26) sur celui-ci.
